# EUROPEAN PATENT SPECIFICATION

(11) **EP 4 288 242 B1**
(45) Date of publication and mention of the grant of the patent: **15.04.2026**
(21) Application number: 22741008.1
(22) Date of filing: 16.06.2022
(51) Int. Cl.: B23Q 1/58, B23Q 11/08, B23Q 17/24

(54) **IMAGING UNIT AND MACHINE TOOL**
BILDGEBUNGSEINHEIT UND WERKZEUGMASCHINE
DISPOSITF DE PRISE D'IMAGE ET MACHINE-OUTIL

(30) Priority: 28.06.2021 JP 2021106228
(43) Date of publication of application: 13.12.2023
(73) Proprietor: DMG Mori Co., Ltd., Yamatokoriyama-shi, Nara 639-1160 (JP)
(72) Inventor: SHIGEKANE, Akito, Yamatokoriyama-shi, Nara 639-1160 (JP); KUBOTA, Junichi, Yamatokoriyama-shi, Nara 639-1160 (JP)
(74) Representative: Isarpatent
(86) International application number: PCT/JP2022/024083
(87) International publication number: WO 2023/276694

(56) References cited:
- DE-A1- 10 153 581
- JP-A- 2015 182 159
- JP-B1- 6 884 933

## Description

### [Technical Field]

The present invention relates to an imaging unit that images shapes of tools in a machine tool.

### [Background Art]

Examples of machine tools include a turning center that moves a tool relative to a rotating workpiece, a machining center that moves a rotating tool relative to a workpiece, and a combined machine having combined functions of a turning center and a machining center. Tools are fixed to a tool holding part such as a tool spindle or a blade rest. A machine tool machines a workpiece while changing tools and moving the tool holding part in accordance with a machining program provided in advance.

In a case where a tool has an abnormality, such as a fracture or a breakage, or abrasion of a tool exceeds an acceptable level in such a machine tool, the tool (hereinafter also referred to as a "faulty tool") cannot be used. Thus, a technology for imaging a blade shape of a tool by a camera at the time of use and testing whether or not the tool is a faulty tool on the basis of the images has been proposed (Patent Literature 1). PTL 2 provides a measuring apparatus for a tool displacement of a machine tool that can exactly measure a displacement of a tool tip position with a simple constitution.

A tool test is generally performed on the basis of images obtained while the tool is illuminated by an illumination unit. Arrangement of the camera and the illumination unit on just opposite sides of a tool enables the camera to obtain a high-contrast image in which the outline position of the tool is easily viewable. Specifically, the outline of a tool is extracted from differences in the contrast between the tool and the background to generate tool shape data. Whether or not the tool is a faulty tool can be determined on the basis of the resultant tool shape.

### [Citation List]

### [Patent Literature]

[PTL 1]
   JP 2015-131357 A
[PTL 2]
   JP 2015-182159 A

### [Summary of Invention]

### [Technical Problem]

In some machine tools, a tool test is performed in a machining chamber. However, since a coolant (a cutting oil) is injected in the machining chamber to remove heat of a tool and a workpiece during machining, it is preferable that the camera can be suppressed from being stained with the coolant. Furthermore, the coolant in the form of mist (referred to as "mist coolant") remains for a while after the coolant is stopped and it is accordingly preferable that staining with the mist coolant can also be suppressed. It is preferable that staining on the illumination can also be suppressed.

### [Solution to Problem]

According to the present invention, an imaging unit detachable from a machine tool is provided, as defined by independent claim 1.

### [Advantageous Effects of Invention]

According to the present invention, staining of the camera with a coolant can be suppressed even when the camera is installed in a machining chamber.

### [Brief Description of Drawings]

[Fig. 1]

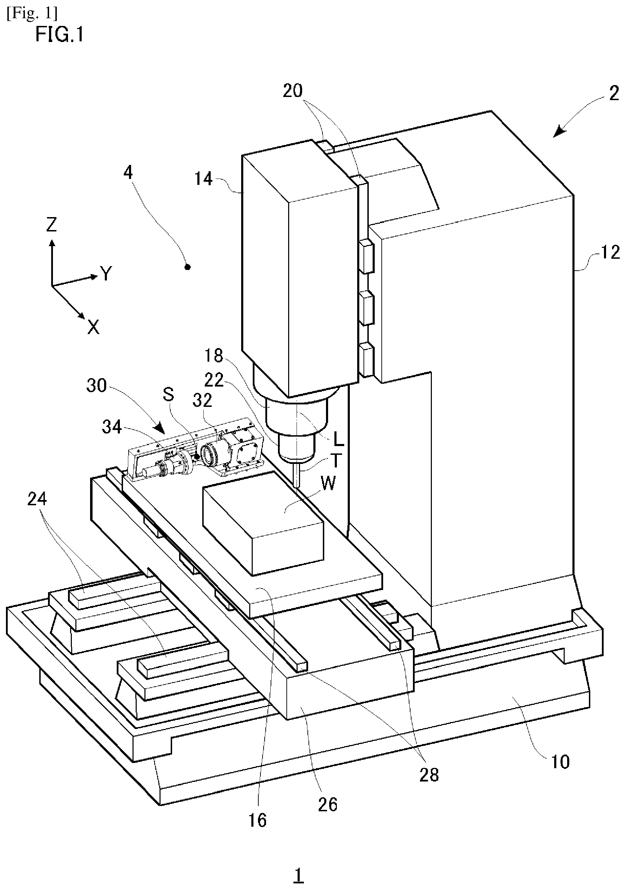

   FIG. 1 is a perspective view of a schematic configuration of a machine tool according to an embodiment.
[Fig. 2]

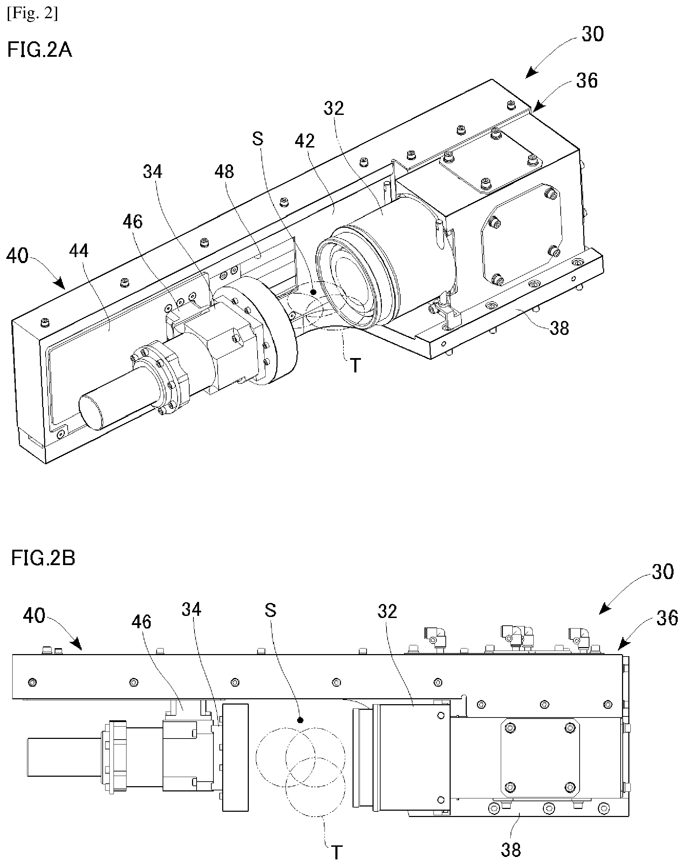

   FIGS. 2A and 2B are diagrams of an external appearance of an imaging unit.
[Fig. 3]

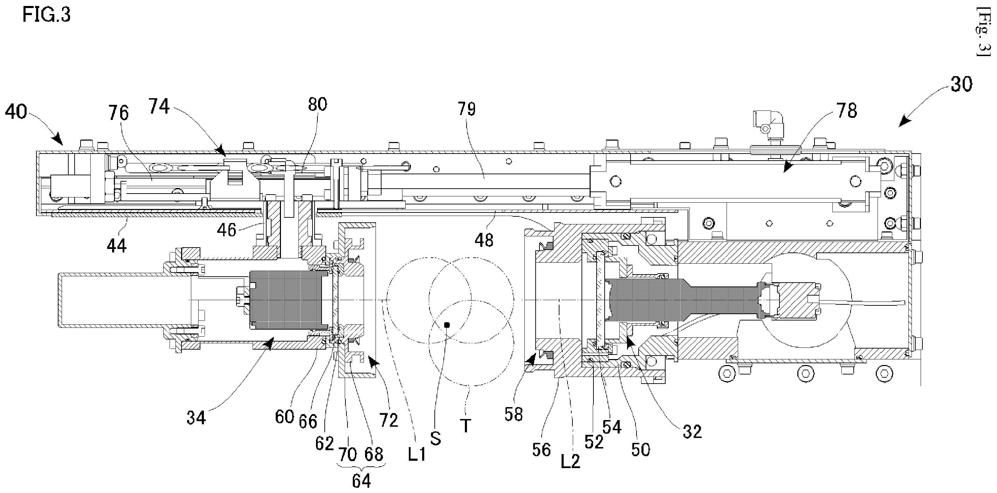

   FIG. 3 is a cross-sectional view of the imaging unit.
[Fig. 4]

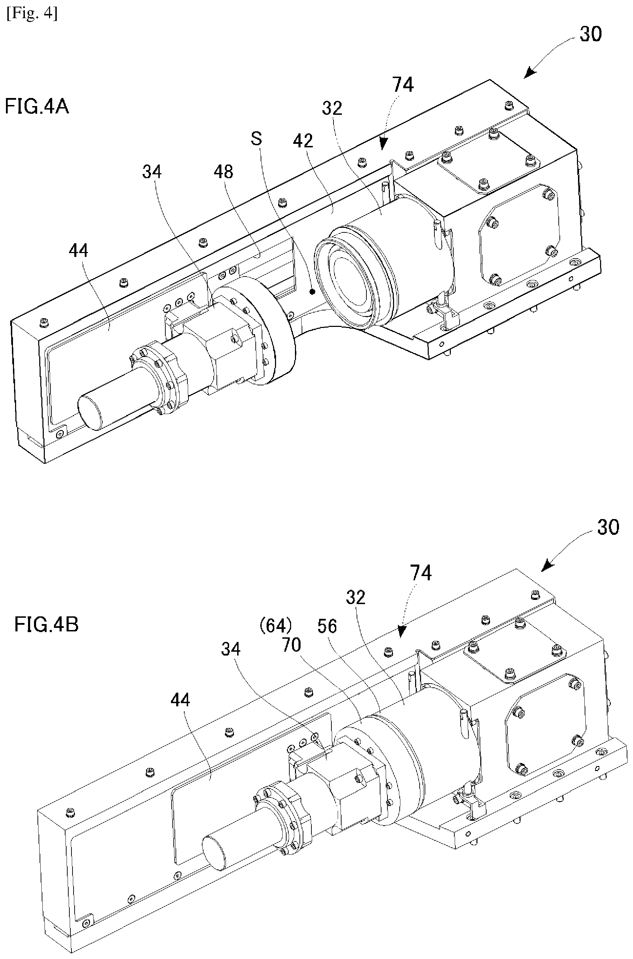

   FIGS. 4A and 4B are diagrams illustrating an operation of the imaging unit.
[Fig. 5]

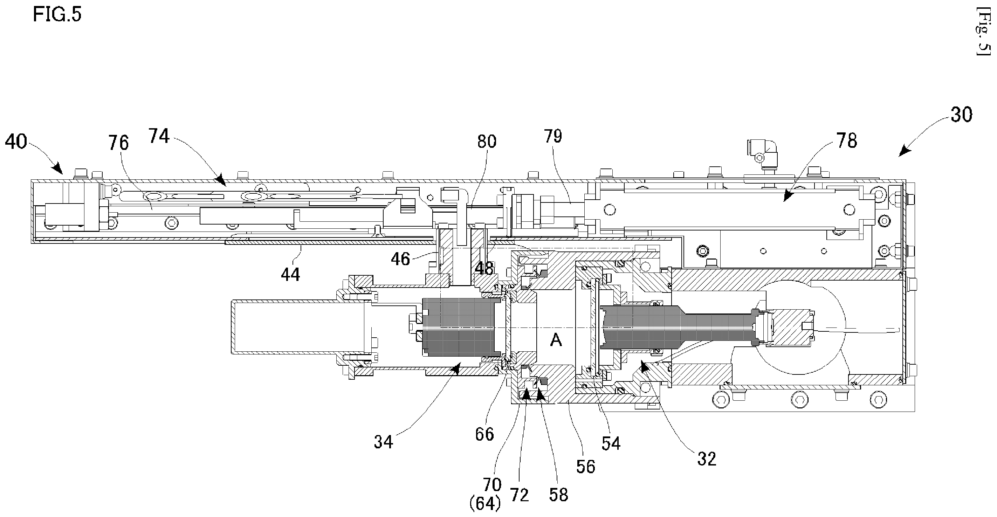

   FIG. 5 is a cross-sectional view of the imaging unit, which illustrates a connected state of a camera and an illumination unit.
[Fig. 6]

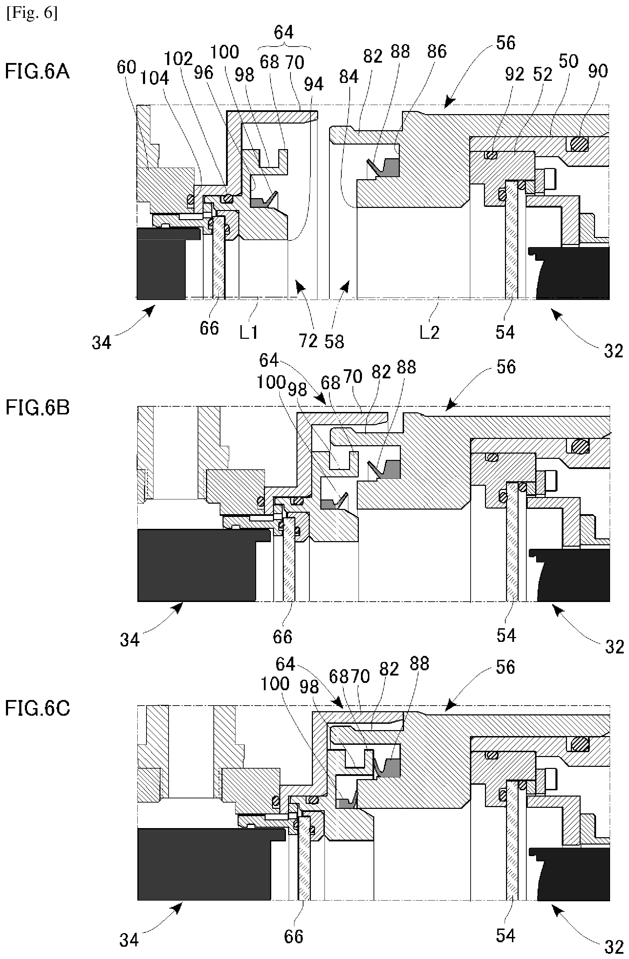

   FIGS. 6A to 6C are enlarged views of a portion A in FIG. 5.
[Fig. 7]

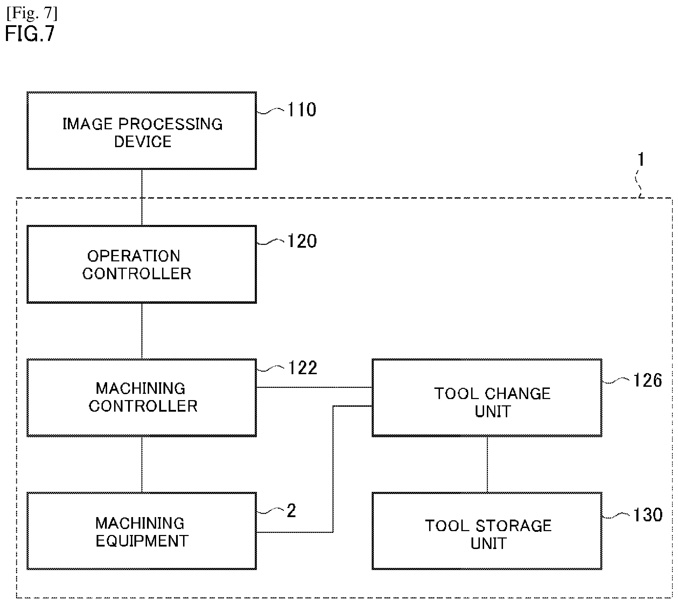

   FIG. 7 is a hardware configuration diagram of a machine tool.
[Fig. 8]

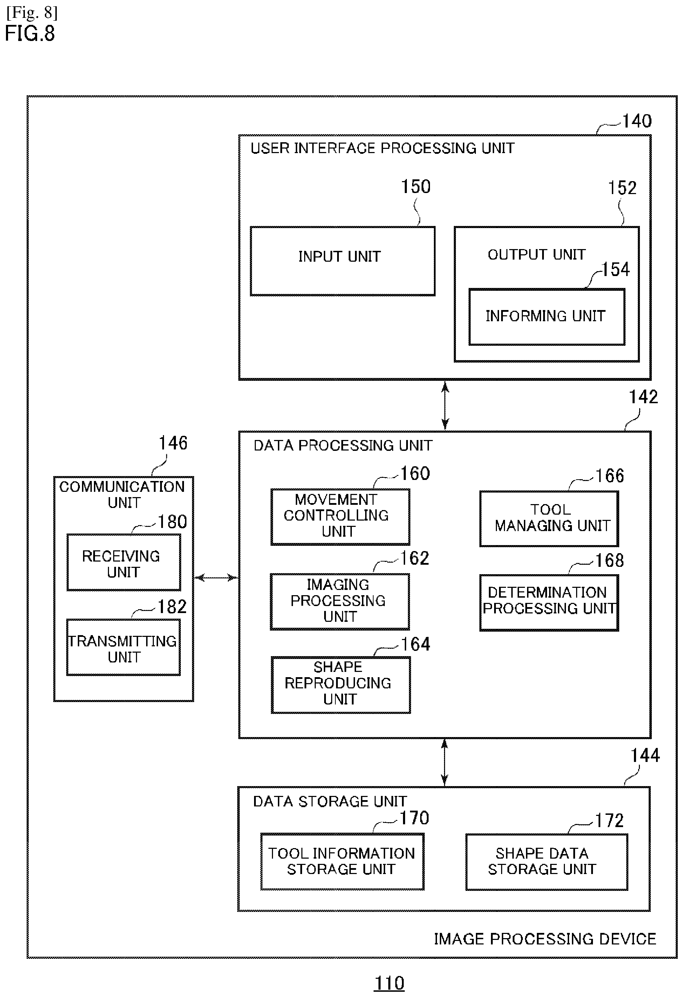

   FIG. 8 is a functional block diagram of an image processing device.
[Fig. 9]

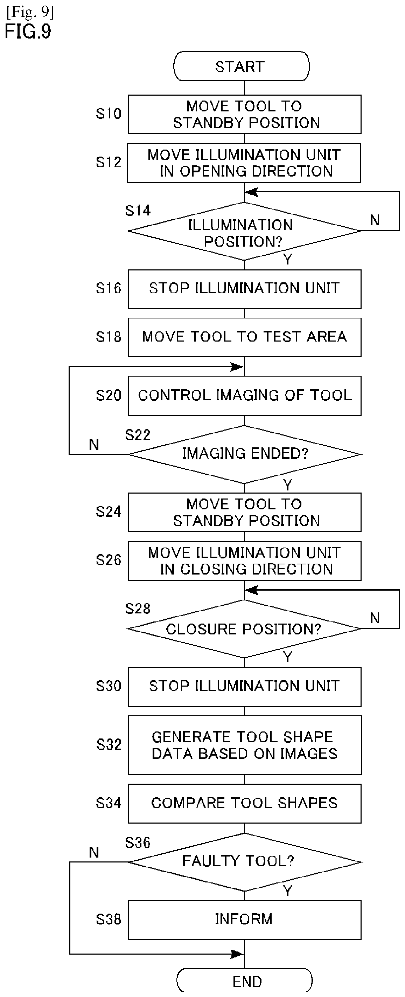

   FIG. 9 is a flowchart illustrating processes of a tool testing process.

### [Description of Embodiments]

An embodiment of the present invention will now be described with reference to the drawings.

FIG. 1 is a perspective view of a schematic configuration of a machine tool according to the embodiment. The right-left direction, the front-back direction, and the up-down direction of a machine tool 1 as viewed from the front will be referred to as an X-axis direction, a Y-axis direction, and a Z-axis direction, respectively.

The machine tool 1 is an upright machining center and includes machining equipment 2. A housing, which is not illustrated, is provided to cover the machining equipment 2, and a machining chamber 4 is formed in the housing. A console is provided on a side face of the housing. The machining equipment 2 includes a bed 10, a column 12 erected on the bed 10, a spindle head 14 provided to be movable upward and downward with respect to the column 12, and a table 16 provided on the bed 10 to be movable backward and forward, and rightward and leftward. The spindle head 14 supports a spindle 18 to be rotatable.

Guide rails 20 are provided on the front face of the column 12 to support the spindle head 14 to be movable in the Z-axis direction. Movement of the spindle head 14 is realized by a feed mechanism and a servomotor for driving the feed mechanism, which are not illustrated. The feed mechanism is, for example, a feed screw mechanism using a ball screw.

The spindle head 14 has an axis L in the Z-axis direction and supports the spindle 18 to be rotatable about the axis L. A spindle motor, which is not illustrated, for rotationally driving the spindle 18 is mounted in the spindle head 14. A tool T held by a tool holder 22 can be coaxially attached to the spindle 18. The spindle 18 can be moved in the Z-axis direction by driving of the spindle head 14.

Guide rails 24 are provided on the top face of the bed 10 to support a saddle 26 to be movable in the Y-axis direction. Guide rails 28 are provided on the top face of the saddle 26 to support the table 16 to be movable in the X-axis direction. Movement of each of the saddle 26 and the table 16 is realized by a feed mechanism and a servomotor for driving the feed mechanism, which are not illustrated. The feed mechanisms are, for example, feed screw mechanisms using a ball screw.

A workpiece W is fixed to the table 16 with a jig, which is not illustrated. The workpiece W can be moved in the X-axis direction and the Y-axis direction by driving of the saddle 26 and the table 16. Specifically, the configuration described above enables three-dimensional adjustment of the relative positions of the workpiece W and the tool T.

An imaging unit 30 is also fixed to the table 16 with a jig. The imaging unit 30 is attached to the machine tool 1 when being used, and is detachable from the machine tool 1. The imaging unit 30 includes a camera 32 and an illumination unit 34 for tool testing. The camera 32 includes an image sensor (an image pickup device) such as a complementary metal oxide semiconductor (CMOS) or a charge-coupled device (CCD). The camera 32 in the present embodiment has a resolution of about 1.7 million pixels (1224×1024). In addition, the camera 32 is capable of capturing a maximum of 80 images per second.

The camera 32 is arranged to position the optical axis to be parallel to the top face of the table 16. The illumination unit 34 is disposed to face the camera 32 and is arranged to position the optical axis to be aligned with the optical axis of the camera 32. Transmitted illumination of the illumination unit 34 enables the camera 32 to obtain high-contrast images in which the outline position of a tool T is easily viewable.

A test area S is provided between the camera 32 and the illumination unit 34. At the time of a tool test, the spindle head 14 is moved and a leading end part of a tool T is set in the test area S. Whether or not there is an abnormality such as a fracture or a breakage of a blade edge, that is, whether or not the tool T is a faulty tool is tested (details will be described later).

A configuration of the imaging unit 30 is explained in detail next. FIGS. 2A and 2B are diagrams of an external appearance of the imaging unit 30. FIG. 2A is a perspective view and FIG. 2B is a plan view.

As illustrated in FIG. 2A, the imaging unit 30 is configured by assembling the camera 32 and the illumination unit 34 to a base member 36. The base member 36 includes a base 38 to be fixed to the top face of the table 16, and a guide unit 40 provided on the base 38. The base 38 also functions as a jig for fixing the imaging unit 30 to the table 16. The guide unit 40 includes a guide mechanism (which will be described later) for guiding driving of the illumination unit 34. The guide unit 40 has a partition 42 for separating a space where a driving unit of the guide mechanism is located and the test area S.

The camera 32 is mounted on the base 38 and fixed thereto. The base 38 has a structure in which a portion outside the mounting area is largely cut. A shutter 44 is slidably supported by the partition 42. The illumination unit 34 is fixed to a support 46 that is protruded from the side face of the shutter 44. The illumination unit 34 is supported to position the optical axis to be parallel to the shutter 44 and moves integrally with the shutter 44. An opening 48 is provided on the partition 42 near the test area S. The opening 48 is opened and closed by an operation of the shutter 44. The opening 48 may be omitted in a modification.

The test area S is formed in a state where the camera 32 and the illumination unit 34 are separated from each other as illustrated. To measure a three-dimensional shape of a tool T, a plurality of placements (positions in the X-Y plane) of the tool T in the test area S can be selected (see two-dot chain lines). The position of the tool T can be changed by movement of the table 16.

FIG. 3 is a cross-sectional view of the imaging unit 30. Specifically, FIG. 3 illustrates a cross section at a height position including the optical axis of the camera 32 seen from above.
The camera 32 has a body 50 that accommodates an optical mechanism, and a lens unit 52 assembled so as to close a front end portion of the body 50. The lens unit 52 holds a lens 54. A cover 56 is attached so as to cover the lens unit 52 and the front end portion of the body 50. In the present embodiment, the cover 56 is made of an aluminum alloy. The cover 56 has a stepped cylindrical shape and includes a seal structure 58 at a front end portion thereof (details will be described later).

The illumination unit 34 includes a body 60 that accommodates an optical mechanism, a lens unit 62 assembled so as to close a front end portion of the body 60, and a cover unit 64 assembled so as to cover the lens unit 62. The lens unit 62 holds a lens 66. The cover unit 64 has a dual structure including an inner cover 68 and an outer cover 70. In the present embodiment, the inner cover 68 and the outer cover 70 are made of an aluminum alloy. The cover unit 64 has a stepped cylindrical shape and includes a seal structure 72 at a front end portion thereof (details will be described later). An optical axis L1 of the illumination unit 34 is aligned with an optical axis L2 of the camera 32.

The guide unit 40 includes a guide mechanism 74 for moving the illumination unit 34 in a direction of the optical axis L1. The guide mechanism 74 includes a guide rail 76 and an air cylinder 78. The guide rail 76 extends in parallel to the optical axes of the camera 32 and the illumination unit 34, and an operating part 80 is slidably attached thereto. The operating part 80 is fixed to a leading end of a rod 79 of the air cylinder 78 and the support 46 is fixed to the operating part 80. With this configuration, the air cylinder 78 reciprocates the illumination unit 34 along the optical axis L1.

A cable (a communication line) for connecting the imaging unit 30 and an image processing device 110 described later (see FIG. 7) to each other, a pipe (a tube) for supplying air to the air cylinder 78, and the like are arranged in the guide unit 40.

FIGS. 4A and 4B are diagrams illustrating an operation of the imaging unit 30. FIG. 4A illustrates a separated state of the camera 32 and the illumination unit 34, and FIG. 4B illustrates a connected state of the camera 32 and the illumination unit 34. FIG. 5 is a cross-sectional view of the imaging unit 30, which illustrates a connected state of the camera 32 and the illumination unit 34.

As illustrated in FIG. 4A, at the time of a tool test, the guide mechanism 74 moves the illumination unit 34 to an opened position, which brings the camera 32 and the illumination unit 34 to a separated state. The test area S (corresponding to "imaging area") is accordingly formed between the camera 32 and the illumination unit 34 (see FIGS. 2A and 2B).

On the other hand, when a tool test is not performed, the guide mechanism 74 moves the illumination unit 34 to a closed position, which brings the camera 32 and the illumination unit 34 to a connected state, as illustrated in FIG. 4B. At this time, the outer cover 70 of the illumination unit 34 is connected to the front end portion of the cover 56 of the camera 32 in a manner overlapping therewith as illustrated also in FIG. 5. The sealing property between the camera 32 and the illumination unit 34 is provided by cooperation of the seal structure 58 and the seal structure 72. Accordingly, staining of the camera 32 can be suppressed. Particularly, the lenses of the camera 32 and the illumination unit 34 are protected from external environments. That is, the lenes are prevented or suppressed from being stained with a coolant scattering during machining. The opening 48 is closed by the shutter 44 at this time.

Details of the seal structures 58 and 72 are explained next.

FIGS. 6A to 6C are enlarged views of a portion A in FIG. 5. FIGS. 6A to 6C illustrate processes of connecting the camera 32 and the illumination unit 34 to each other.

As illustrated in FIG. 6A, the cover 56 of the camera 32 has an annular fitting portion 82 at a front end portion where the outer diameter is reduced. An annular recessed fitting portion 86 is formed on the front side of the cover 56 between an opening end 84 exposing the lens 54 and the annular fitting portion 82. The annular fitting portion 82 is protruded forward relative to the opening end 84.

With this configuration, the cover 56 has an annular projecting and recessed portion (a first annular projecting and recessed portion) formed on a face, facing the illumination unit 34 on the front side of the lens 54 to be concentric with the optical axis L2. A sealing V-ring 88 (a seal ring) is fitted to the recessed fitting portion 86. The seal structure 58 is realized by the annular projecting and recessed portion and the V-ring 88.

Sealing between the body 50 and the cover 56 is provided by an O-ring 90 (a seal ring) fitted to an outer peripheral face of the body 50. Sealing between the lens unit 52 and the body 50 is provided by an O-ring 92 (a seal ring) fitted to an outer peripheral face of the lens unit 52.

The cover unit 64 of the illumination unit 34 is configured by coaxially assembling the inner cover 68 to the outer cover 70. The outer cover 70 is protruded forward relative to the inner cover 68. An annular recessed fitting portion 96 is provided on a front end face of the inner cover 68 on a radially outer side of an opening end 94 exposing the lens 66. An annular trench 98 is formed on an outer peripheral face of the inner cover 68.

With this configuration, the cover unit 64 has an annular projecting and recessed portion (a second annular projecting and recessed portion) formed on a face, facing the camera 32, on the front side of the lens 66 to be concentric with the optical axis L1. A sealing V-ring 100 (a seal ring) is fitted to the recessed fitting portion 96. The seal structure 72 is realized by the annular projecting and recessed portion and the V-ring 100.

Sealing between the inner cover 68 and the outer cover 70 is provided by an O-ring 102 (a seal ring) fitted to an outer peripheral face of the inner cover 68. Sealing between the body 60 and the cover unit 64 is provided by an O-ring 104 (a seal ring) fitted to a front end face of the body 60.

In the configuration described above, fitting structures of the camera 32 and the illumination unit 34 are realized by the annular projecting and recessed portion (the first annular projecting and recessed portion) of the cover 56 and the annular projecting and recessed portion (the second annular projecting and recessed portion) of the cover unit 64. These annular projecting and recessed portions have complementary shapes to each other.

Specifically, as illustrated in FIG. 6B, when the illumination unit 34 is moved in a closing direction, the annular projecting and recessed portion of the cover 56 and the annular projecting and recessed portion of the cover unit 64 are telescopically fitted to each other. Connection thereof is completed by abutting of the front end face of the outer cover 70 on the front face of the cover 56 (a base end face of the annular fitting portion 82) as illustrated in FIG. 6C.

At this time, the V-ring 100 is brought to close contact with the front end face (an opening end face) of the cover 56 and the V-ring 88 is brought to close contact with the front end face of the inner cover 68. A so-called labyrinth structure where a gap between the outer cover 70 and the annular fitting portion 82 and a gap between the annular fitting portion 82 and the inner cover 68, which are in a fitted state, are repeatedly widened and narrowed toward the inside of each cover is realized. Accordingly, a satisfactory sealing performance due to the seal structures 58 and 72 is realized.

In the labyrinth structure, an inner labyrinth is positioned at a deeper position than an outer periphery end face of each of the cover units. The same holds for the V-rings. Specifically, the front end face (an end face where the opening end 84 is located) of the inner projecting portion of the annular projecting and recessed portion of the camera 32 is positioned inward of the cover 56, that is, axially backward relative to the front end face of the annular fitting portion 82. The V-ring 88 is also positioned axially backward relative to the front end face of the annular fitting portion 82. Similarly, in the illumination unit 34, the front end face (the front end face of the inner cover 68, an end face where the opening end 94 is located) of the inner projecting portion of the annular projecting and recessed portion is positioned axially backward relative to the front end face of the outer cover 70. The V-ring 100 is also positioned axially backward relative to the front end face of the outer cover 70.

The optical mechanism (including a protective glass for the lens 54 and the like) of the camera 32 is arranged on an inner side of the outer periphery end face of the camera 32. Specifically, the optical mechanism is positioned axially backward relative to the front end face of the annular fitting portion 82. Similarly, the optical mechanism (including a protective glass for the lens 66 and the like) of the illumination unit 34 is arranged on an inner side of the outer periphery end face of the illumination unit 34. Specifically, the optical mechanism is positioned axially backward relative to the front end face of the outer cover 70.

Although not illustrated, air purge is constantly performed to the camera 32 and the illumination 34 to prevent penetration of mist from outside. Specifically, a purge mechanism that jets purge air from a portion near the lens (the protective glass) toward a central area relative to the innermost V-ring regardless of the opened/closed state of the shutter 44 is provided in each of the camera 32 and the illumination unit 34. This prevents mist from adhering to the protective glass of the camera 32 or the illumination unit 34 even in the open state of the shutter 44.

FIG. 7 is a hardware configuration diagram of the machine tool 1.

The machine tool 1 includes an operation controller 120, a machining controller 122, the machining equipment 2, a tool change unit 126, and a tool storage unit 130. The image processing device 110 for performing tool tests is communicably connected to the machine tool 1. The image processing device 110 may be part of the machine tool 1.

The machining controller 122 functioning as a numerical controller transmits control signals to the machining equipment 2 in accordance with a machining program. The machining equipment 2 moves the spindle 18 (the spindle head 14) and the table 16 to machine a workpiece in accordance with instructions from the machining controller 122.

The operation controller 120 includes the console, which is not illustrated, and controls the machining controller 122. Tools are stored in the tool storage unit 130. The tool change unit 126 corresponds to a so-called automatic tool changer (ATC) and is installed on an outer side of the machining chamber 4. The tool change unit 126 takes out a tool from the tool storage unit 130 and replaces a tool held on the spindle 18 with the taken-out tool in accordance with a replacement instruction from the machining controller 122.

The image processing device 110 mainly performs image processing such as recognition of tool shapes. The image processing device 110 may be part of the operation controller 120. The image processing device 110 may be a common laptop personal computer (PC) or tablet computer.

FIG. 8 is a functional block diagram of the image processing device 110.

The components of the image processing device 110 are implemented by hardware including computing units such as central processing units (CPUs) and various auxiliary processors, storage devices such as memories and storages, and wired or wireless communication lines that connect these units and devices, and software that is stored in the storage devices and supplies processing instructions to the computing units. Computer programs may be constituted by device drivers, operating systems, various application programs on upper layers thereof, and a library that provides common functions to these programs. Blocks to be described below do not refer to configurations in units of hardware but to blocks in units of functions.

Note that the operation controller 120 and the machining controller 122 may also be implemented by hardware including computing units such as processors, storage devices such as memories and storages, and wired or wireless communication lines that connect these units and devices, and software and programs that are stored in the storage devices and supply processing instructions to the computing units, which are executed on operation systems separate from the image processing device 110.

The image processing device 110 includes a user interface processing unit 140, a data processing unit 142, a data storage unit 144, and a communication unit 146.

The user interface processing unit 140 performs processes relating to user interfaces such as receiving operations made by a user, displaying images, and outputting audio. The communication unit 146 performs communication with the operation controller 120. The data processing unit 142 performs various processes on the basis of data obtained by the user interface processing unit 140 and data stored in the data storage unit 144. The data processing unit 142 also functions as an interface of the user interface processing unit 140, the data storage unit 144, and the communication unit 146. The data storage unit 144 stores various programs and set data.

The user interface processing unit 140 includes an input unit 150 and an output unit 152.

The input unit 150 receives inputs made by a user via a touch panel or a hardware device such as a handle. The output unit 152 provides the user with various information by image display or audio output. The output unit 152 includes an informing unit 154. When a predetermined abnormality condition such as an error of a tool to be replaced (detection of a faulty tool) is met, the informing unit 154 informs the user of occurrence of relevant events.

The communication unit 146 includes a receiving unit 180 that receives data from the operation controller 120, and a transmitting unit 182 that transmits data and commands to the operation controller 120.

The data processing unit 142 includes a movement controlling unit 160, an imaging processing unit 162, a shape reproducing unit 164, a tool managing unit 166, and a determination processing unit 168.

The movement controlling unit 160 drives and controls the guide mechanism 74 to control the movement of the illumination unit 34. The imaging processing unit 162 controls the camera 32 to image a tool T. The shape reproducing unit 164 generates "tool shape data" which are data indicating the shape of the tool T on the basis of the images. The tool managing unit 166 registers a tool ID and the tool shape data in association with each other for each tool T in the data storage unit 144.

The determination processing unit 168 determines whether a tool T has an abnormality such as a fracture, a breakage, or swarf wound therearound (whether or not the tool T is a faulty tool) on the basis of the images of the tool T or on the basis of the tool shape data. When the determination processing unit 168 determines that the tool T has an abnormality, the informing unit 154 informs the user of the same. The determination processing unit 168 may instruct the operation controller 120 to display the same on the console. When the tool T is determined to be a faulty tool, the tool managing unit 166 associates the information of being a faulty tool with the tool ID, and registers the associated information as tool information into the data storage unit 144.

The data storage unit 144 includes a tool information storage unit 170 and a shape data storage unit 172. The tool information storage unit 170 stores information (tool information) of each of the tools T accommodated in the tool storage unit 130 in association with the tool ID. The tool information includes information such as the type, the shape, the size, and the length of each tool, for example. The tool information may further include information such as cumulative total hours of use and a cumulative total number of uses. The data storage unit 144 also temporarily stores taken images.

The tool information storage unit 170 updates the tool information each time tool replacement is performed. When a tool T is determined to be a faulty tool as described above, the tool information storage unit 170 adds the information of being a faulty tool to the tool information. After the determination, the tool managing unit 166 prohibits use of the tool T, which is a faulty tool, that is, tool replacement with the tool change unit 126.

The shape data storage unit 172 stores the tool shape data generated by the shape reproducing unit 164 in association with the tool ID. The shape data storage unit 172 also stores tool shape data of each tool T registered before use as "reference data" in association with the tool ID. The determination processing unit 168 can determine whether or not a tool T is a faulty tool by comparing tool shape data after use during machining and the reference data of the same tool with each other.

FIG. 9 is a flowchart illustrating processes of a tool testing process.

In the tool testing process, the machining controller 122 first moves the spindle head 14 and the table 16 to move a tool T to a standby position (S10). In the present embodiment, the "standby position" is set to a position immediately above the test area S. At an initial time of the tool test, the camera 32 and the illumination unit 34 are in a connected state to prevent staining with a coolant.

Next, the movement controlling unit 160 drives the guide mechanism 74 to move the illumination unit 34 in an opening direction to be separated from the camera 32 (S12). When the illumination unit 34 reaches a preset illumination position (S14:Y), the movement of the illumination unit 34 is stopped (S16). The test area S is thereby opened.

Subsequently, the machining controller 122 lowers the spindle head 14 to move the blade edge of the tool T to the test area S (S18). The imaging processing unit 162 controls the camera 32 and images the tool T (S20). An image obtained at this time is stored. At the time of imaging, the imaging is performed a plurality of times to obtain a three-dimensional image of the tool T.

When the imaging of the tool T ends (S22: Y), the machining controller 122 raises the spindle head 14 to move the tool T to the standby position (S24). Meanwhile, the movement controlling unit 160 drives the guide mechanism 74 to move the illumination unit 34 in a closing direction to move toward the camera 32 (S26). When the illumination unit 34 reaches a closure position where the illumination unit 34 is connected to the camera 32 (S28: Y), the movement of the illumination unit 34 is stopped (S30). Accordingly, the lenses of the camera 32 and the illumination unit 34 are protected again.

The shape reproducing unit 164 generates the tool shape data on the basis of the images obtained in this manner (S32). The tool managing unit 166 temporarily stores the tool shape data in the shape data storage unit 172.

The determination processing unit 168 reads reference data having the same tool ID as the tool shape data, and compares these tool shape data with each other (S34). Specifically, the tool shapes of the same tool are compared with each other. When the tool T is a faulty tool with the similarity between these tool shapes being a predetermined value or smaller (S36: Y), the informing unit 154 provides information of the same (S38). Specifically, the informing unit 154 causes an alert screen to be displayed. When the tool T is not a faulty tool (S36: N), the process of S38 is skipped.

The machine tool 1 has been described above on the basis of the embodiment.

In the present embodiment, the illumination unit 34 is movable in the imaging unit 30 to enable the connected state and the separated state of the camera 32 and the illumination unit 34 to be realized. In the connected state, the illumination unit 34 functions as a protective cover for the camera 32. In the separated state, the test area S (the imaging area) is open between the camera 32 and the illumination unit 34.

According to the present embodiment, bringing the camera 32 and the illumination unit 34 to a connected state enables suppression of staining with the coolant even when the camera 32 is installed in the machining chamber 4. Particularly, the lenses of the camera 32 and the illumination unit 34 are protected from external environments. Since the movement of the illumination unit 34 is controlled and the illumination unit 34 is automatically moved in the opening/closing direction, there is no need to separately provide a cover member for protecting the lens of the camera 32 and an attaching/detaching operation of the cover member by an operator is not required. Therefore, operating efficiency in the tool test is improved.

The present invention is not limited to the embodiment described above and modifications thereof, and any component thereof can be modified and embodied without departing from the scope of the invention, which is defined by the appended claims.

In the embodiment described above, an example of the configuration in which the camera 32 is fixed in the imaging unit 30 and the illumination unit 34 is moved has been presented. In a modification, a configuration in which the illumination unit 34 is conversely fixed and the camera 32 is moved by the guide mechanism 74 may be applied. Alternatively, a configuration in which both the camera 32 and the illumination unit 34 are moved may be adopted. In this case, the guide mechanism 74 for moving the camera 32 is provided.

In the embodiment described above, as illustrated in FIGS. 2, an example of the configuration in which a portion of the base 38 outside the mounting area of the camera 32 (a portion below the illumination unit 34 and the test area S) is largely cut has been presented. In a modification, the base may extend to below the illumination unit 34 while an opening is provided at a position of the base below the test area S. Swarf adhering to a tool T may be discharged downward from the opening. This enables suppression of deposition of swarf in the test area S.

While an example of a machining center as the machine tool 1 has been presented in the embodiment, it is needless to say that the tool testing technology described above is also applicable to turning centers and combined machines.

## Claims

1. An imaging unit (30) detachable from a machine tool (1), the imaging unit (30) comprising:
a camera (32) for imaging a tool in an imaging area (S);
an illumination unit (34) disposed to face the camera (32); **characterised in that** it further comprises
a guide mechanism (74) for moving at least one of the illumination unit (34) and the camera (32) between a connected state in which the camera (32) and the illumination unit (34) are connected together and a separated state in which the camera (32) and the illumination unit (34) are separated from each other,
wherein in the separated state, the imaging area (S) is present between the camera (32) and the illumination unit (34) and wherein in the connected state, the illumination unit (34) functions as a protective cover for the camera (32).

2. The imaging unit (30) according to claim 1,
wherein the camera (32) and the illumination unit (34) have fitting structures that fit to each other when the camera (32) and the illumination unit (34) are connected together,
the fitting structures include:
a first annular projecting and recessed portion formed on a face, facing the illumination unit (34), of a cover of the camera on a front side of a lens of the camera, the first annular projecting and recessed portion being concentric with an optical axis of the camera (32); and
a second annular projecting and recessed portion formed on a face, facing the camera, of a cover of the illumination unit, the second annular projecting and recessed portion being concentric with an optical axis of the illumination unit, and
the first annular projecting and recessed portion and the second annular projecting and recessed portion have complementary shapes to each other, and are telescopically fitted to each other.

3. The imaging unit (30) according to claim 1, further comprising:
a base member (36) for supporting the camera (32) and the illumination unit (34),
wherein at least one of the illumination unit (34) and the camera (32) is slidably supported by the base member (36) .

4. A machine tool (1) comprising an imaging unit (30) according to any of claims 1- 3.

5. The machine tool (1) according to claim 4, further comprising:
a table (16) having an upper face on which a workpiece is to be fixed,
wherein the imaging unit (30) is fixed to the upper face of the table (16).

## Patentansprüche

1. Bildgebungseinheit (30), die von einer Werkzeugmaschine (1) abnehmbar ist, wobei die Bildgebungseinheit (30) umfasst:
eine Kamera (32) zum Abbilden eines Werkzeugs in einem Abbildungsbereich (S);
eine Beleuchtungseinheit (34), die so angeordnet ist, dass sie der Kamera zugewandt ist,
**dadurch gekennzeichnet, dass** sie des Weiteren einen Führungsmechanismus (74) zum Bewegen mindestens einer der Beleuchtungseinheit (34) und der Kamera (32) zwischen einem verbundenen Zustand, in dem die Kamera (32) und die Beleuchtungseinheit (34) miteinander verbunden sind, und einem getrennten Zustand, in dem die Kamera (32) und die Beleuchtungseinheit (34) voneinander getrennt sind, umfasst,
wobei in dem getrennten Zustand der Abbildungsbereich (S) zwischen der Kamera (32) und der Beleuchtungseinheit (34) vorhanden ist und wobei in dem verbundenen Zustand die Beleuchtungseinheit (34) als eine Schutzabdeckung für die Kamera (32) fungiert.

2. Bildgebungseinheit (30) nach Anspruch 1,
wobei die Kamera (32) und die Beleuchtungseinheit (34) Passungsstrukturen aufweisen, die zueinander passen, wenn die Kamera (32) und die Beleuchtungseinheit (34) miteinander verbunden sind,
wobei die Passungsstrukturen aufweisen:
einen ersten ringförmigen vorspringenden und ausgesparten Abschnitt, der an einer der Beleuchtungseinheit (34) zugewandten Stirnfläche einer Abdeckung der Kamera an einer Vorderseite eines Objektivs der Kamera gebildet ist, wobei der erste ringförmige vorspringende und ausgesparte Abschnitt konzentrisch zu einer optischen Achse der Kamera (32) verläuft; und
einen zweiten ringförmigen vorspringenden und ausgesparten Abschnitt, der an einer der Kamera zugewandten Stirnfläche einer Abdeckung der Beleuchtungseinheit gebildet ist, wobei der zweite ringförmige vorspringende und ausgesparte Abschnitt konzentrisch zu einer optischen Achse der Beleuchtungseinheit verläuft, und
wobei der erste ringförmige vorspringende und ausgesparte Abschnitt und der zweite ringförmige vorspringende und ausgesparte Abschnitt einander komplementäre Formen haben und teleskopartig aneinandergefügt sind.

3. Bildgebungseinheit (30) nach Anspruch 1, des Weiteren umfassend:
ein Basiselement (36) zum Stützen der Kamera (32) und der Beleuchtungseinheit (34),
wobei mindestens eine der Beleuchtungseinheit (34) und der Kamera (32) verschiebbar durch das Basiselement (36) gestützt wird.

4. Werkzeugmaschine (1), umfassend eine Bildgebungseinheit (30) nach einem der Ansprüche 1-3.

5. Werkzeugmaschine (1) nach Anspruch 4, des Weiteren umfassend:
einen Tisch (16), der eine Oberseite aufweist, auf der ein Werkstück zu befestigen ist,
wobei die Bildgebungseinheit (30) an der Oberseite des Tisches (16) befestigt ist.

## Revendications

1. Unité d'imagerie (30) détachable d'une machine-outil (1), l'unité d'imagerie (30) comprenant :
une caméra (32) pour prendre une image d'un outil dans une zone d'imagerie (S) ;
une unité d'éclairage (34) disposée de manière à faire face à la caméra,
**caractérisée en ce qu'**elle comprend en outre un mécanisme de guidage (74) pour déplacer au moins un élément parmi l'unité d'éclairage (34) et la caméra (32) entre un état relié dans lequel la caméra (32) et l'unité d'éclairage (34) sont reliées l'une à l'autre, et un état séparé dans lequel la caméra (32) et l'unité d'éclairage (34) sont séparées l'une de l'autre,
dans laquelle, dans l'état séparé, la zone d'imagerie (S) est présente entre la caméra (32) et l'unité d'éclairage (34) et dans laquelle, dans l'état relié, l'unité d'éclairage (34) fonctionne comme un couvercle de protection pour la caméra (32).

2. Unité d'imagerie (30) selon la revendication 1,
dans laquelle la caméra (32) et l'unité d'éclairage (34) ont des structures d'ajustement qui s'ajustent l'une à l'autre lorsque la caméra (32) et l'unité d'éclairage (34) sont reliées l'une à l'autre,
les structures d'emboîtement comportant :
une première partie annulaire saillante et évidée formée sur une face, dirigée vers l'unité d'éclairage (34), d'un couvercle de la caméra sur un côté avant d'un objectif de la caméra, la première partie saillante et évidée annulaire étant concentrique à un axe optique de la caméra (32) ; et
une seconde partie annulaire saillante et évidée formée sur une face, dirigée vers la caméra, d'un couvercle de l'unité d'éclairage, la seconde partie annulaire saillante et évidée étant concentrique à un axe optique de l'unité d'éclairage, et
la première partie annulaire saillante et évidée et la seconde partie annulaire saillante et évidée ont des formes complémentaires l'une de l'autre et sont rassembleés l'une à l'autre de manière télescopique.

3. Unité d'imagerie (30) selon la revendication 1, comprenant en outre :
un élément de base (36) pour supporter la caméra (32) et l'unité d'éclairage (34),
dans laquelle au moins une parmi l'unité d'éclairage (34) et la caméra (32) est supportée par l'élément de base (36) de manière coulissante.

4. Machine-outil (1) comprenant une unité d'imagerie (30) selon l'une quelconque des revendications 1 à 3.

5. Machine-outil (1) selon la revendication 4, comprenant en outre :
une table (16) ayant une face supérieure sur laquelle une pièce à usiner doit être fixée,
dans laquelle l'unité d'imagerie (30) est fixée à la face supérieure de la table (16).
